# EUROPÄISCHE PATENTANMELDUNG

(11) **EP 1 721 732 A1**
(43) Veröffentlichungstag der Anmeldung: **15.11.2006**
(21) Anmeldenummer: 06009215.2
(22) Anmeldetag: 04.05.2006
(51) Int. Cl.: B32B 5/00, F16S 5/00

(54) **Mehrschichtiges Werkstoffteil und daraus hergestelltes Formteil**

(30) Priorität: 10.05.2005 DE 202005007647 U; 10.11.2005 DE 102005054062; 23.12.2005 DE 102005062353
(71) Anmelder: SKS Sitzkomponenten GmbH & Co. KG, 41065 Mönchengladbach (DE)
(72) Erfinder: Salzmann, Oliver, 47877 Willich (DE); Franzke, Guido, 48336 Sassenberg (DE)
(74) Vertreter: Gesthuysen, von Rohr & Eggert

(57) **Zusammenfassung**

Die Erfindung betrifft ein mehrschichtig aufgebautes, umformbares, insbesondere thermoformbares, plattenförmiges Werkstoffteil (1) mit mindestens einem umformbaren, insbesondere thermoformbaren, plattenförmigen Träger (3) aus einem thermoplastischen Material und mindestens einem dem Träger (3) zugeordneten, insbesondere textilen Flächenmaterial (4), das auf den Träger (3) auflaminiert ist, sowie ein hieraus durch Umformung hergestelltes Formteil (6), welches sich insbesondere zur Verwendung in der Möbelindustrie, insbesondere zur Herstellung von Sitzmöbeln, eignet.

## Beschreibung

Die vorliegende Erfindung betrifft ein umformbares, insbesondere thermoformbares, plattenförmiges Werkstoffteil nach dem Oberbegriff von Anspruch 1 und ein hieraus herstellbares Formteil, welches insbesondere zur Herstellung von Möbeln geeignet ist. Des weiteren betrifft die vorliegende Erfindung die Verwendung des Formteils zur Herstellung von Möbeln, insbesondere Sitzmöbeln, sowie hiermit hergestellte Möbel als solche. Schließlich betrifft die vorliegende Erfindung ein Verfahren zur Herstellung eines solchen Formteils.

In bezug auf die Herstellung von mehrschichtigen, eine thermoplastische Komponente bzw. Schicht enthaltenden Formteilen ist es im Stand der Technik vorgesehen, daß ein umformbares Material, welches im allgemeinen plattenförmig ausgebildet ist, zunächst mittels geeigneter Verfahren in die gewünschte dreidimensionale Form überführt wird. In einem anschließenden Schritt kann auf das so erhaltene dreidimensionale Formteil eine weitere Schicht, beispielsweise ein textiles Flächengebilde oder dergleichen, aufgebracht bzw. dauerhaft hieran befestigt werden. Dabei erfolgt die Befestigung des textilen Flächenmaterials beispielsweise mittels Verklebung oder dergleichen. Nachteilig hierbei ist jedoch, daß das Flächenmaterial nach der Umformung aufgebracht wird, weil dies die Verklebung erschwert und daß die hohe Anzahl an Verfahrensschritten einerseits arbeits- und kostenintensiv ist. Insbesondere ist es oftmals nicht möglich, das textile Flächenmaterial ganzflächig mit dem umgeformten Material zu verbinden; denn insbesondere im Bereich starker Umformungen (z. B. bei starken Biegungen, Ein- bzw. Auswölbungen und dergleichen) tritt eine starke Dehn- bzw. Stauchbeanspruchung des textilen Flächenmaterials auf, was oftmals zu einer Ablösung bzw. einer Delaminierung des Flächenmaterials führen kann. Darüber hinaus tritt beim nachträglichen Aufbringen eines textilen Flächenmaterials auf das bereits umgeformte Material häufig eine unerwünschte Faltenbildung auf. Ein weiterer Nachteil bei diesem Verfahren ist darin zu sehen, daß aufgrund der nachträglichen Fixierung des textilen Flächenmaterials auf die dreidimensionale Struktur eine ungleichmäßige Dehnbeanspruchung des textilen Flächenmaterials resultieren kann, was zu einem uneinheitlichen Oberflächenbild führt. Schließlich können die durch das nachträgliche, mitunter ungleichmäßige "Aufziehen" des textilen Flächenmaterials auf die Trägerstruktur resultierenden hohen bzw. uneinheitlichen Rückstellkräfte zu einer nachträglichen Verformung des Formteils führen.

In der auf die Anmelderin selbst zurückgehenden DE 36 12 834 A1 wird ein Textilverbundstoff vorgeschlagen, welcher aus einer mit einem Textilstoff beklebten Schaumstofflage besteht. Dabei ist es vorgesehen, den Textilstoff vor der endgültigen Formgebung auf die Schaumstofflage aufzubringen. Nachteilig ist hierbei jedoch, daß der Schaumstoff zunächst verhautet bzw. an den Oberflächenporen verschlossen werden muß, um überhaupt eine Formgebung durchführen zu können. Es resultiert jedoch ein mitunter wenig belastbarer und infolge der Elastizität des Schaumstoffs wenig formstabiler Verbundstoff, der sich aufgrund des prinzipiellen Fehlens eines zusätzlichen Trägermaterials nicht für hohe Kraftbeanspruchungen eignet, wie sie im Rahmen von selbsttragenden und kraftmäßig belastbaren Strukturen, insbesondere für Sitzmöbel, gefordert werden. Darüber hinaus ist das beschriebene Verfahren aufgrund der zwingend vorgesehenen Verhautung des Schaumstoffs zeit- und kostenintensiv sowie apparativ aufwendig.

Vor diesem technischen Hintergrund besteht nunmehr die Aufgabe der vorliegenden Erfindung darin, ein Werkstoffteil bzw. ein daraus herstellbares dreidimensionales Formteil bereitzustellen, welches die zuvor geschilderten Nachteile des Standes der Technik zumindest teilweise vermeidet oder aber wenigstens abschwächt. Insbesondere soll ein Werkstoffteil mit mehrschichtigem Aufbau bereitgestellt werden, welches ein insbesondere textiles Flächenmaterial auf einem Träger umfaßt und welches sich zum Umformen in ein formstabiles, hohen mechanischen Beanspruchungen standhaltendes Formteil eignen soll. Dabei sollen in bezug auf das Formteil starke Biegungen, Ein- und Ausbuchtungen und dergleichen realisiert werden können, ohne daß Delaminierungen oder Faltenbildungen in bezug auf die einzelnen Schichten des Formteils auftreten. Schließlich soll das resultierende Formteil selbsttragend und in hohem Maße formstabil sein, so daß es sich insbesondere zur Verwendung in Möbeln, wie Sitzmöbeln, eignet.

Zur Lösung der zuvor geschilderten Aufgabenstellung schlägt die vorliegende Erfindung ein umformbares, insbesondere thermoformbares, plattenförmiges Werkstoffteil mit mehrschichtigem Aufbau gemäß Anspruch 1 bzw. 3 sowie ein durch Umformen, insbesondere Thermoformen, des erfindungsgemäßen Werkstoffteils erhältliches Formteil nach Anspruch 9 bzw. 11 bzw. 12 vor. Weitere, vorteilhafte Ausgestaltungen sind Gegenstand der jeweiligen Unteransprüche.

Weiterhin sind Gegenstand der vorliegenden Erfindung die Verwendung des erfindungsgemäßen Formteils zur Herstellung von Möbeln, insbesondere Sitzmöbeln, gemäß Anspruch 13 sowie Möbel, insbesondere Sitzmöbel, gemäß Anspruch 14.

Schließlich ist Gegenstand der vorliegenden Erfindung ein Verfahren zur Herstellung des erfindungsgemäßen Formteils gemäß Anspruch 15. Weitere, vorteilhafte Ausgestaltungen des erfindungsgemäßen Verfahrens sind Gegenstand der Verfahrensunteransprüche.

Ein erster Gegenstand der vorliegenden Erfindung ist somit ein umformbares, insbesondere thermoformbares, plattenförmiges Werkstoffteil mit mehrschichtigem Aufbau, welches sich insbesondere zur Herstellung von Formteilen, vorzugsweise für Möbel, eignet und mindestens einen umformbaren, insbesondere thermoformbaren plattenförmigen Träger aufweist, der aus einem thermoplastischem Material besteht. Das erfindungsgemäße Werkstoffteil zeichnet sich insbesondere dadurch aus, daß es mindestens ein dem Träger zugeordnetes, insbesondere textiles Flächenmaterial aufweist, welches auf den Träger auflaminiert ist. Aufgrund dieser speziellen Ausgestaltung des erfindungsgemäßen Werkstoffteils eignet es sich insbesondere als Ausgangsmaterial zur Herstellung von dreidimensionalen Formteilen, die einen weiteren Gegenstand der vorliegenden Erfindung darstellen. Hierbei ist es insbesondere möglich, starke Biegungen bzw. Umformungen mittels herkömmlicher Umformverfahren zu realisieren, wodurch individuelle, an die jeweiligen Anforderungen - beispielsweise anatomische Formgebung bei gleichzeitig hoher kraftmäßiger Belastungsfähigkeit in bezug auf Sitzmöbel - angepaßte Formen bzw. Strukturen realisiert werden können.

Das erfindungsgemäße Werkstoff- bzw. Formteil ist nicht auf die zuvor beschriebene Zwei-Schicht-Struktur begrenzt. Vielmehr ist es gleichermaßen möglich, daß zwischen dem Träger und dem Flächenmaterial zudem mindestens eine flächige Zwischenschicht angeordnet ist, wobei diese Zwischenschicht insbesondere als eine Schaumstoffschicht ausgebildet sein kann. In diesem Fall ist das Flächenmaterial auf die Zwischenschicht auflaminiert, und die Zwischenschicht ist wiederum mit dem Träger verbunden, insbesondere flächig verbunden, so daß in diesem Fall eine Drei-Schicht-Struktur bzw. ein dreischichtiges Verbundmaterial resultiert. Zudem kann - wie nachfolgend noch ausführlich geschildert - auch die dem Flächenmaterial abgewandte Seite mit einem weiteren, insbesondere textilen Flächenmaterial bzw. einer weiteren Zwischenschicht ausgestattet sein, so daß gewissermaßen eine sogenannte "Sandwichstruktur" resultiert, bei welcher der thermoplastische Träger sozusagen die Kernschicht des Schicht- bzw. Kompositmaterials bildet.

Die zentrale Idee der vorliegenden Erfindung ist insbesondere darin zu sehen, daß zunächst ein Werkstoffteil als bereits zumindest im wesentlichen fertiggestellter, sämtliche Komponenten enthaltender Verbund bereitgestellt wird und dieses mehrschichtige Werkstoffteil dann einem nachfolgenden Formgebungsverfahren zum Erhalt des erfindungsgemäßen Formteils unterzogen werden kann. Mit anderen Worten zeichnet sich die vorliegende Erfindung dadurch aus, daß bereits vor dem Schritt bzw. während des Schritts der Formgebung mit dem erfindungsgemäßen Werkstoffteil ein stabiles Verbundmaterial mit dauerhaft und flächig miteinander verbundenen Schichten vorliegt und folglich ein nachträgliches Aufbringen von Schichten nach dem Formgebungsverfahren vollständig entfällt. Hierdurch wird es erfindungsgemäß ermöglicht, das erfindungsgemäße Formteil mit besonders stark und unterschiedlich voneinander ausgeformten Bereichen auszustatten, ohne daß beispielsweise das auf den Träger aufgebrachte Flächenmaterial delaminiert oder Falten wirft. Zudem handelt es sich im Rahmen der vorliegenden Erfindung aufgrund der bevorzugten Verwendung eines bei Gebrauchstemperatur harten und vorzugsweise nichtgeschäumten, gewissermaßen massiven thermoplastischen Trägers um formstabile, selbsttragende Formteile, die hohen Belastungen standhalten können, wie sie insbesondere bei der Verwendung im Zusammenhang mit Sitzmöbeln auftreten.

Erfindungsgemäß wird unter dem Begriff "plattenförmig" (z. B. plattenförmiges Werkstoffteil) eine zumindest im wesentlichen ebene bzw. planare Form insbesondere des erfindungsgemäßen Werkstoffteils verstanden, wobei die Dicke des Werkstoffteils zumindest im wesentlichen über seine Fläche konstant ist. Sofern anwendungsbezogen erwünscht, können die einzelnen Schichten flächenbezogen jedoch auch unterschiedliche Dicken aufweisen, beispielsweise um eine weiter optimierte anatomische Form bei Sitzmöbeln zu realisieren.

Im Rahmen der vorliegenden Erfindung ist der Begriff "umformbar" (z. B. umformbares Werkstoffteil) so zu verstehen, daß das erfindungsgemäße Werkstoffteil unter Beibehaltung der Masse des Schichtzusammenhangs zumindest im wesentlichen irreversibel in eine andere Form bzw. Struktur überführt werden kann.

In diesem Zusammenhang ist der Begriff "thermoformbar" (z. B. thermoformbares Werkstoffteil) so zu verstehen, daß - wie nachfolgend noch ausführlich geschildert - das erfindungsgemäße Werkstoffteil unter Erwärmung, beispielsweise auf einen Temperaturbereich oberhalb des Erweichungspunktes des thermoplastischen Trägers, insbesondere mittels Warmformen, umgeformt werden kann. Hierzu geeignete Verfahren sind dem Fachmann hinlänglich bekannt. Beispielsweise kann das Thermoformen mittels Tiefziehen, Vakuumformen, Vakuumtiefziehformen und dergleichen erfolgen.

Weiterhin bezeichnet der Begriff "dreidimensional" (dreidimensionale Form bzw. Struktur in bezug auf das erfindungsgemäße Formteil) eine derartige Struktur, die von der ebenen bzw. planaren Struktur abweichende ausgeformte bzw. räumliche Bereiche aufweist, zu denen beispielsweise und in nichtbeschränkender Weise Ein- bzw. Auswölbungen, Vertiefungen, Biegungen und dergleichen zu zählen sind.

Weiterhin ist der Begriff "formstabil" (z. B. formstabiles Werkstoffteil bzw. Formteil) erfindungsgemäß so zu verstehen, daß das erfindungsgemäße Werkstoffteil bzw. Formteil den bei der jeweiligen Anwendung, beispielsweise im Rahmen der Herstellung von Sitzmöbeln, resultierenden Belastungen widerstehen kann bzw. diese aufzunehmen imstande ist.

Der Ausdruck "zugeordnet" (z. B. ein dem Träger zugeordnetes Flächenmaterial) ist erfindungsgemäß derart zu verstehen, daß einerseits die Möglichkeit besteht, daß das Flächenmaterial unmittelbar, d. h. direkt auf dem Träger auflaminiert bzw. fixiert ist, andererseits dieser Begriff aber gleichermaßen auch eine mittelbare Zuordnung des Flächenmaterials in bezug auf den Träger umfassen kann, bei welcher beispielsweise zwischen dem Flächenmaterial und dem Träger mindestens eine weitere Zwischenschicht angeordnet ist.

Schließlich ist unter dem Begriff "Auflaminieren" bzw. "Laminieren" (z. B. Auflaminieren des Flächenmaterials auf den Träger) ein insbesondere flächiges Verbinden bzw. Verkleben der jeweiligen Schichten des erfindungsgemä-βen Werkstoffteils zu verstehen, wobei das Verbinden der einzelnen Schichten beispielsweise mittels dem Fachmann wohlbekannter Verfahren, insbesondere Kaschierverfahren, im allgemeinen mittels geeigneter Laminier- bzw. Kaschiermittel, wie Klebstoffe, Schmelzklebstoffe, Schmelzkleberwebs und dergleichen, erfolgen kann. In diesem Zusammenhang sollte die flächige Verbindung bzw. Laminierung oder Kaschierung der einzelnen Schichten vorzugsweise vollflächig erfolgen, d. h. das Kaschiermittel ist vorzugsweise kontinuierlich aufgetragen. Gleichermaßen ist jedoch auch eine diskontinuierliche Verbindung möglich, beispielsweise durch einen punktförmigen oder rasterförmigen Auftrag des Klebstoffes. Gemäß einer besonderen Ausgestaltung können die jeweiligen Schichten des erfindungsgemäßen Werkstoffteils durch dem Fachmann an sich bekannte Flammkaschierverfahren miteinander verbunden werden, wobei insbesondere gewährleistet sein sollte, daß zumindest eine Schicht über hitzeklebrige Eigenschaften verfügt.

Weitere Vorteile, Merkmale, Eigenschaften und Aspekte der vorliegenden Erfindung ergeben sich aus der nachfolgenden Beschreibung von bevorzugten Ausführungsformen anhand der Figuren. Es zeigt:
- Fig. 1A: einen schematischen Querschnitt des erfindungsgemäßen Werkstoffteils gemäß einer erfindungsgemäß bevorzugten Ausführungsform;
- Fig. 1B: einen schematischen Querschnitt des erfindungsgemäßen Werkstoffteils gemäß einer alternativen, erfindungsgemäß bevorzugten Ausführungsform;
- Fig. 2: eine schematische Darstellung eines aus einem erfindungsgemäßen Werkstoffteil gemäß Fig. 1B geformten Formteils gemäß einer erfindungsgemäß bevorzugten Ausführungsform;
- Fig. 3A: eine schematische Darstellung eines erfindungsgemäßen Sitzmöbels, welches unter Verwendung des erfindungsgemäßen Formteils hergestellt ist;
- Fig. 3B: eine schematische Darstellung eines anderen erfindungsgemäßen Sitzmöbels, welches unter Verwendung eines erfindungsgemäßen Formteils hergestellt ist;

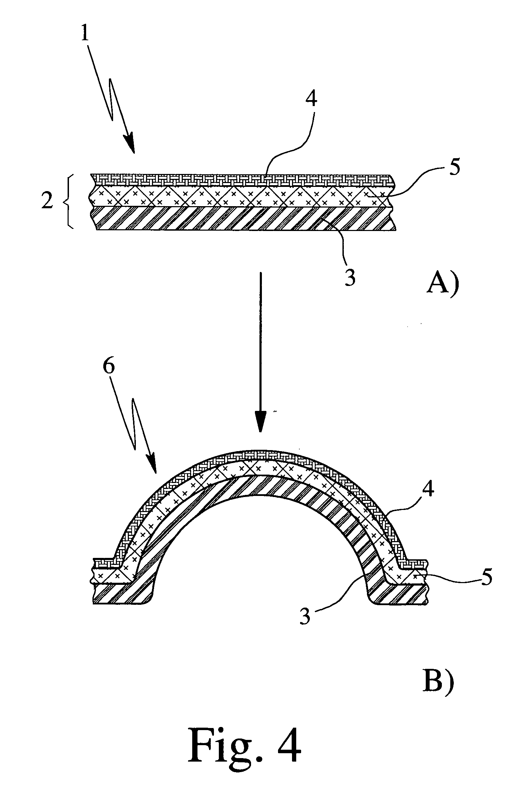

- Fig. 4: eine schematische Darstellung eines erfindungsgemäßen Verfahrensablaufes, bei welchem ein erfindungsgemäßes Werkstoffteil zu einem erfindungsgemäßen Formteil umgeformt wird.

In den Figuren werden für gleiche oder ähnliche Teile dieselben Bezugszeichen verwendet, wobei entsprechende Eigenschaften und Vorteile erreicht werden, auch wenn eine wiederholte Beschreibung aus Vereinfachungsgründen weggelassen ist.

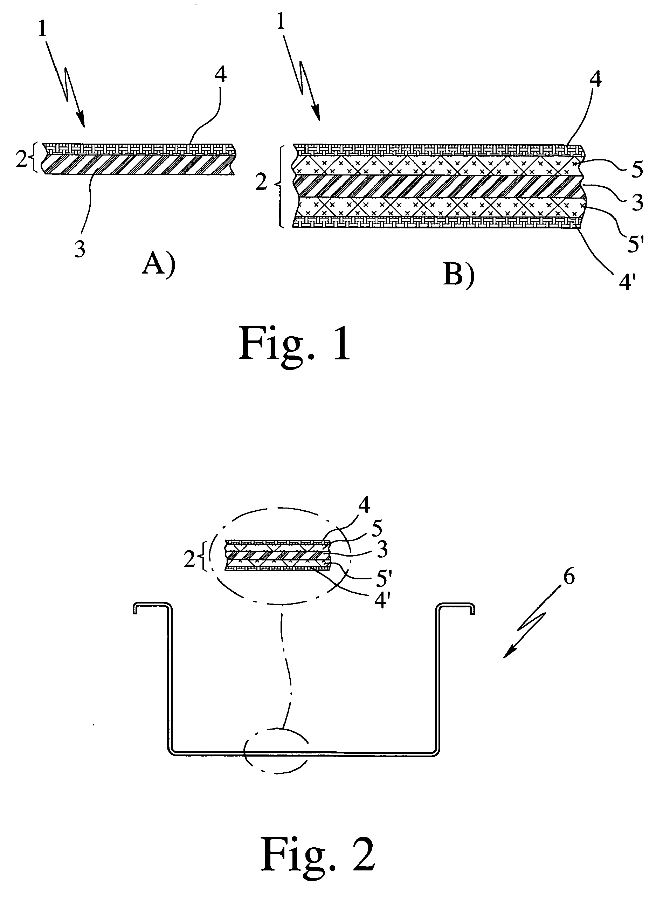

Fig. 1A zeigt ein umformbares, insbesondere thermoformbares, plattenförmiges Werkstoffteil 1 nach der Erfindung mit mehrschichtigem Aufbau 2, insbesondere zur Herstellung von Formteilen 6 vorzugsweise für Möbel, wobei das Werkstoffteil 1 mindestens einen umformbaren, insbesondere thermoformbaren, plattenförmigen Träger 3 aufweist, wobei der Träger 3 aus einem thermoplastischen Material besteht. Das Werkstoffteil 1 weist mindestens ein dem Träger 3 zugeordnetes, insbesondere textiles Flächenmaterial 4 auf, wobei das Flächenmaterial 4 auf den Träger 3 auflaminiert ist.

Fig. 1A zeigt somit einen Verbund bzw. ein einstückig ausgebildetes Schichtmaterial, bestehend aus zwei Schichten, nämlich einem Flächenmaterial 4 einerseits und einem thermoplastischen Träger 3 andererseits.

Wie zuvor geschildert, ist die vorliegende Erfindung jedoch in keiner Weise auf diese Ausführungsform beschränkt. So ist es zudem möglich, wie die Fig. 1B beispielhaft zeigt, daß zwischen dem Träger 3 und dem Flächenmaterial 4 mindestens eine insbesondere flächige Zwischenschicht 5 angeordnet sein kann; bei der Zwischenschicht 5 handelt es sich vorzugsweise um eine nachfolgend noch beschriebene Schaumstoffschicht. Gemäß der Ausführungsform von Fig. 1B ist das Flächenmaterial auf die Zwischenschicht 5 in zuvor beschriebener Weise auflaminiert, und die Zwischenschicht 5 ist mit dem Träger 3 insbesondere flächig verbunden. Gemäß dieser Ausführungsform resultiert somit ein Drei-Schicht-Material, welches aber gleichermaßen wie das in Fig. 1A beschriebene Werkstoffteil 1 nach Art eines Verbund- bzw. Kompositmaterials ausgebildet ist. Diesbezüglich kann die Verbindung der Zwischenschicht 5 mit dem Träger 3 beispielsweise durch Laminieren bzw. Kaschieren (z. B. durch Verkleben etc.) erfolgen. Alternativ kann die Zwischenschicht 5 mit dem Träger 3 durch Aufflammen verbunden sein. Gleichermaßen ist es möglich, daß das Flächenmaterial 4 und/oder die Zwischenschicht 5 und/oder der Träger 3 hitzeklebrig ausgebildet ist bzw. sind, so daß eine dauerhafte Verbindung durch entsprechendes Erwärmen und Zusammenfügen der jeweiligen Schichten erfolgen kann.

Mit anderen Worten betrifft die vorliegende Erfindung ein umformbares, insbesondere thermoformbares, plattenförmiges Werkstoffteil 1 mit mehrschichtigem Aufbau 2, insbesondere zur Herstellung von Formteilen 6 vorzugsweise für Möbel, wobei das Werkstoffteil 1 mindestens einen umformbaren, insbesondere thermoformbaren, plattenförmigen Träger 3 aufweist, wobei der Träger 3 aus einem thermoplastischen Material besteht. Das Werkstoffteil 1 weist mindestens ein dem Träger 3 zugeordnetes, insbesondere textiles Flächenmaterial 4 und mindestens eine zwischen dem Träger 3 und dem Flächenmaterial 4 angeordnete flächige Zwischenschicht 5, insbesondere eine Schaumstoffschicht, auf. Das Flächenmaterial 4 ist gemäß dieser Ausführungsform - wie in Fig. 1B exemplarisch veranschaulicht - auf die Zwischenschicht 5 auflaminiert und die Zwischenschicht 5 ist mit dem Träger 3 verbunden, insbesondere flächig verbunden.

Im Rahmen der vorliegenden Erfindung ist es gleichermaßen möglich, daß die Zwischenschicht 5 wiederum mehrere Einzelschichten umfaßt, die beispielsweise aus verschiedenen Schaumstoffmaterialien bestehen können, so daß auch ein vielschichtiger Aufbau 2 mit mehr als drei Schichten resultieren kann.

Was die Dimensionierung der Schichten anbelangt, so können das Flächenmaterial 4, der Träger 3 sowie gegebenenfalls die Zwischenschicht 5 flächenbezogen gleiche Ausmaße aufweisen, so daß die Schichten gewissermaßen dekkungsgleich im erfindungsgemäßen Werkstoffteil angeordnet sind. Dabei kann es vorgesehen sein, das die Randbereiche der Schichten 3, 4, 5 nichtlaminiert sind, so daß die Randbereiche des Flächenmaterials 4 und/oder der Zwischenschicht 5 gewissermaßen von dem Träger 3 ab- bzw. hochklappbar sind. Gemäß einer weiteren erfindungsgemäßen Ausführungsform ist bzw. sind das Flächenmaterial 4 und/oder die Zwischenschicht 5 flächenbezogen kleiner dimensioniert als der Träger 3, so daß sich der Träger 3 dann gewissermaßen über mindestens einen Rand des Flächenmaterials 4 und/oder des Trägers 5 erstreckt. Wie nachfolgend beschrieben, kann ein derartiges erfindungsgemäßes Werkstoffteil 1 in spezieller Weise umgeformt werden.

Wie zuvor beschrieben, zeichnet sich die vorliegende Erfindung dadurch aus, daß ein zumindest im wesentlichen fertig ausgebildetes bzw. hergestelltes Werkstoffteil 1 bereitgestellt wird, welches bereits sämtliche Komponenten bzw. Schichten des fertigen Endprodukts (beispielsweise die Sitzschale eines Sitzmöbels) aufweist und welches in dieser bereits fertiggestellten Ausbildung in ein Formteil 6 umformbar ist. Somit entfallen nach Fertigstellung des Endprodukts 6 beispielsweise nachfolgende Beschichtungs- bzw. Beaufschlagungsschritte, die - wie zuvor beschrieben - oftmals nicht zu zufriedenstellenden Ergebnissen führen.

Was den Träger 3 betrifft, so handelt es sich hierbei vorzugsweise um einen bei Gebrauchstemperatur, insbesondere bei Raumtemperatur (25 °C), und Atmosphärendruck harten Thermoplasten. Somit sollte der Träger 3 bei Raumtemperatur (25 °C) und Atmosphärendruck zumindest formstabil bzw. selbsttragend sein. Insbesondere sollte der thermoplastische Träger 3 dergestalt sein, daß nach Durchführung des Umformverfahrens zur Herstellung des erfindungsgemäßen Formteils 6 die durch das insbesondere textile Flächenmaterial 4 bzw. die gegebenenfalls vorhandene Zwischenschicht 5 gegebenenfalls auftretenden Rückstellkräfte zumindest im wesentlichen nicht zu einer Formveränderung des Formteils 6 bzw. des Trägers 3 führen.

Der Träger 3 ist vorzugsweise nichtporös bzw. nichtgeschäumt ausgebildet. Mit anderen Worten ist der Träger 3 gemäß einer erfindungsgemäß besonders bevorzugten Ausführungsform massiv bzw. als solcher hohlraumfrei. Hierdurch wird eine besonders gute Formstabilität bzw. mechanische Stabilität des Werkstoffteils 1 erreicht. Gleichermaßen ermöglicht es die nichtporöse Struktur des Trägers 3, daß das resultierende Werkstoffteil 1 ohne weiteres beispielsweise mittels Vakuumformverfahren zu dem dreidimensionalen Formteil 6 umgeformt werden kann, ohne daß eine vorangehende Verhautung des Trägers 3 erfolgen muß.

Im Rahmen der vorliegenden Erfindung kann das Material des Trägers 3 aus Polymeren bzw. Copolymeren ausgewählt sein. Diesbezüglich kommen vorzugsweise Polyolefine, Vinylpolymere, Polyamide, Polyester, Polycarbonate bzw. Polyurethane in Betracht. Gemäß einer erfindungsgemäß bevorzugten Ausführungsform umfaßt das Material des Trägers 3 Polyolefine, insbesondere Polyethylen oder Polypropylen, besonders bevorzugt Polypropylencopolymerisate, oder aber Acrylnitril/Butadien/Styrol-Copolymerisate (ABS-Copolymerisate). Für weitere Einzelheiten in bezug auf Thermoplaste kann verwiesen werden auf Römpp Chemielexikon, 10. Auflage, Band 6, 1999, Georg Thieme Verlag, Stuttgart/New York, Seiten 4505/4506, Stichwort: "Thermoplaste", dessen gesamter Offenbarungsgehalt einschließlich der dort genannten Literaturstellen hiermit durch Bezugnahme eingeschlossen ist.

Gleichermaßen können im Rahmen der vorliegenden Erfindung auch sogenannte thermoplastische Elastomere für den Träger 3 verwendet werden, welche eine Kombination der Gebrauchseigenschaften von Elastomeren und der Verarbeitungseigenschaften von Thermoplasten aufweisen. Für weitere diesbezügliche Einzelheiten kann gleichermaßen verwiesen werden auf Römpp, Chemielexikon, 10. Auflage, Band 6, 1999, Georg Thieme Verlag, Stuttgart/New York, Seiten 4506/4507, Stichwort: "Thermoplastische Elastomere", dessen Offenbarungsgehalt einschließlich der darin genannten Literaturstellen hiermit durch Bezugnahme eingeschlossen ist.

Erfindungsgemäß werden für den Träger 3 besonders bevorzugt solche Materialien bzw. Thermoplaste eingesetzt, welche eine Streckspannung gemäß ISO 527 von 5 bis 10 N/mm², vorzugsweise 10 bis 45 N/mm², bevorzugt 15 bis 40 N/mm², besonders bevorzugt 20 bis 35 N/mm², aufweisen. Gleichermaßen sollte das Material des Trägers 3 eine Dehnung bei Streckspannung gemäß ISO 527 von weniger als 20 %, vorzugsweise weniger als 16 %, bevorzugt weniger als 12 %, aufweisen. Das Material des Trägers 3 sollte zudem eine Reißfestigkeit gemäß ISO 527 von mindestens 15 N/mm², vorzugsweise mindestens 20 N/mm², bevorzugt mindestens 25 N/mm², aufweisen und/oder eine Reißdehnung gemäß ISO 527 von 5 bis 700 % und einen Elastizitätsmodul gemäß 4-Punkt-Biegeprüfung nach ISO 178 von 500 bis 2.200 N/mm², vorzugsweise 700 bis 2.100 N/mm², bevorzugt 900 bis 1.900 N/mm², aufweisen.

Was das Material des Trägers 3 weiterhin anbelangt, so kann dieses bei 23 °C ohne Bruch schlagzäh (Schlagzähigkeit nach Charpy gemäß EN ISO 179/1eU) sein, bzw. eine Schlagzähigkeit nach Charpy gemäß EN ISO 179/1eU bei -30 °C von mindestens 40 kJ/m², vorzugsweise mindestens 50 kJ/m², bevorzugt mindestens 60 kJ/m², besonders bevorzugt mindestens 70 kJ/m², aufweisen. Weiterhin kann das Material des Trägers 3 eine Kerbschlagzähigkeit gemäß EN ISO 179/1eA bei 23 °C von mindestens 15 kJ/m², vorzugsweise mindestens 25 kJ/m², bevorzugt mindestens 35 kJ/m², aufweisen. Weiterhin kann das Material des Trägers 3 eine Kerbschlagzähigkeit gemäß EN ISO 179/1eA bei -30 °C von mindestens 1 kJ/m², vorzugsweise mindestens 2 kJ/m², bevorzugt mindestens 3 kJ/m², aufweisen und weiterhin eine Kugeldruckhärte (H358/30) gemäß EN ISO 2039-1 von mindestens 50 N/mm², vorzugsweise mindestens 60 N/mm², bevorzugt mindestens 70 N/mm², aufweisen. Schließlich sollte das Material des Trägers 3 eine Dichte von 0,8 bis 1,5 g/cm³, insbesondere 0,85 bis 1,4 g/cm³, vorzugsweise 0,9 bis 1,3 g/cm³, aufweisen. Schließlich sollte das Material des Trägers 3 eine Vicat-Erweichungstemperatur (VST A 120 bzw. VST B 50) gemäß ISO 306 von 80 °C bis 200 °C, vorzugsweise 85 °C bis 180 °C, bevorzugt 90 °C bis 160 °C, aufweisen.

Für den Träger 3 geeignete Materialien sind beispielsweise Metzo® Plast PP/C bzw. Metzo® Plast ABS/M der Metzeler Plastics GmbH, Jülich, Deutschland.

Die Dicke des Trägers 3 kann in weiten Bereich variieren. Erfindungsgemäß bevorzugt kann der Träger 3 eine Dicke von 1 mm bis 20 mm, vorzugsweise 1,5 mm bis 5 mm, bevorzugt 2 mm bis 10 mm, besonders bevorzugt 2,5 mm bis 7 mm, ganz besonders bevorzugt 3 mm bis 5 mm, aufweisen. Allerdings kann von diesen Werten anwendungsbezogen oder einzelfallbedingt abgewichen werden, beispielsweise wenn das erfindungsgemäße Werkstoffteil 1 im Rahmen eines erfindungsgemäßen Formteils 6 beispielsweise zur Herstellung von besonders belastbaren Möbeln verwendet werden soll, wobei die Dicke des Trägers dann 15 mm deutlich übersteigen kann.

Was das Flächenmaterial 4 des umformbaren, insbesondere thermoformbaren, plattenförmigen Werkstoffteils 1 nach der Erfindung anbelangt, so handelt es sich hierbei vorzugsweise um ein textiles Flächenmaterial und insbesondere um ein Gewebe, Gewirke, Gestricke oder Gelege. Gemäß einer erfindungsgemäß besonders bevorzugten Ausführungsform ist das Flächenmaterial 4 ein Gewebe. Darüber hinaus ist es jedoch gleichermaßen möglich, daß als Flächenmaterial 4 beispielsweise ein Leder oder ein Kunstleder eingesetzt wird. Gleichermaßen kommen als Flächenmaterial 4 auch folienartige Kunststoffe und dünnwandige Metallfolien in Betracht. Insbesondere kann das Flächenmaterial 4 derart ausgewählt sein, daß es zumindest im wesentlichen lichtdicht ist.

Das Flächengewicht des Flächenmaterials 4 kann in großen Bereichen variieren. So kann das Flächenmaterial 4 ein Flächengewicht von 25 bis 600 g/m², insbesondere 50 bis 500 g/m², vorzugsweise 100 bis 400 g/m², aufweisen.

Gemäß einer erfindungsgemäß bevorzugten Ausführungsform ist das Flächenmaterial 4 reversibel dehnfähig und/oder insbesondere bielastisch, d. h. in beiden Richtungen dehnbar, bzw. hochelastisch. Dabei kann das Flächenmaterial 4 eine Dehnbarkeit in mindestens eine Richtung, vorzugsweise in Längs- und Querrichtung, von mindestens 5 %, insbesondere mindestens 10 %, vorzugsweise mindestens 20 %, aufweisen, um den beim Umformen gegebenenfalls auftretenden Längen- und Breitenänderungen ohne Zerreißen folgen zu können.

Gemäß einer erfindungsgemäß besonders bevorzugten Ausführungsform wird als Flächenmaterial 4 ein insbesondere bielastisches textiles Gewebe eingesetzt, welches beispielsweise eine Elastizität in Kettrichtung von etwa 35 % oder mehr und in Schußrichtung eine Elastizität von 20 % oder mehr aufweist.

Zur Herstellung eines solchen bielastischen Gewebes können beispielhaft und in nichtbeschränkender Weise spezielle elastische Zwirne eingesetzt werden, wie sie beispielsweise in der auf die Anmelderin selbst zurückgehenden EP 0 036 948 A1 beschrieben sind, deren gesamter Offenbarungsgehalt hiermit durch Bezugnahme eingeschlossen ist. Hierbei handelt es sich insbesondere um einen elastischen Zwirn, bei welchem ein Elastomerfaden von etwa 140 bis 200 Denier mit zwei Garnen, deren Stärke jeweils etwa ein Zehntel des Elastomerfadens beträgt, haftend verzwirnt ist, wobei als Garne vorzugsweise im Rotorverfahren hergestellte OE-Garne ("Offenes-Ende-Garne") aus Polyvinylchlorid-, Polyvinylcyanid-, Polyacrylnitril- und/oder Wollfäden verwendet werden. Gleichermaßen kann erfindungsgemäß ein bielastisches Gewebe verwendet werden, welches in der ebenfalls auf die Anmelderin selbst zurückgehenden DE 28 57 498 C2 beschrieben ist, deren Inhalt hiermit durch Bezugnahme vollumfänglich eingeschlossen ist.

Gemäß einer besonders bevorzugten Ausführungsform kann ein bielastisches Gewebe verwendet werden, welches ein Gewicht von 350 g/m² bei einer Elastizität in Kettrichtung von mindestens 35 % und einer Elastizität in Schußrichtung von mindestens 20 % aufweist. Ein derartiges Gewebe kann, bezogen auf das Gesamtgewicht des Gewebes, beispielsweise etwa 4,8 % Elastan® , etwa 89,3 % Polyester und etwa 5,9 % Polyamid umfassen. Erfindungsgemäß ist es gleichermaßen möglich, daß das Flächenmaterial 4 zusätzlich imprägniert, beschichtet oder dergleichen ist, um das Flächenmaterial 4 beispielsweise flammhemmend auszurüsten bzw. um die Schmutzabweisung zu erhöhen.

Erfindungsgemäß kann das Flächenmaterial 4 mittels eines Laminier- und/oder Kaschiermittels, insbesondere mittels eines Klebstoffs, auf den Träger 3 auflaminiert sein. Erfindungsgemäß bevorzugt ist der Klebstoff ein Schmelzklebstoff bzw. ein Schmelzkleberweb. Als Klebstoffe kommen zudem dem Fachmann als solche bekannte Kunststoffdispersionen, aber auch Reaktivklebstoffe, wie insbesondere polyurethanbasierte Ein- oder Zweikomponentensysteme in Frage. Im allgemeinen ist der Klebstoff flächig aufgetragen, so daß beispielsweise eine kontinuierliche Verklebung - insbesondere wie zuvor definiert - resultiert. Gleichermaßen ist im Rahmen der vorliegenden Erfindung auch eine solche flächige Verklebung bzw. Laminierung möglich, bei welcher das Laminier- bzw. Kaschiermittel punkt- bzw. punktrasterförmig bzw. diskontinuierlich aufgetragen ist. Gleichermaßen ist es möglich, daß das Flächenmaterial 4 und/oder der Träger 3 hitzeklebrig ausgebildet sind.

Was die Zwischenschicht 5 des erfindungsgemäßen Werkstoffteils 1 betrifft, so kann es sich hierbei um einen Schaumstoff, vorzugsweise auf Basis von Polyolefinen oder Polyurethanen handeln, wobei Schaumstoffe auf Basis von Polyolefinen erfindungsgemäß bevorzugt sind. Gleichermaßen kann erfindungsgemäß auch ein peroxidisch vernetzbarer Polyethylenschaum eingesetzt werden. Der Schaumstoff kann gleichermaßen thermoverformbar sein, wobei die Erweichungstemperatur derart ausgewählt werden sollte, daß der Schaumstoff bei der Umformung des erfindungsgemäßen Werkstoffteils 1 zu dem Formteil 6 nach der Erfindung nicht zerstört bzw. der Schaumstoff nicht zu stark komprimiert wird. Der Schaumstoff sollte zumindest derart beschaffen sein, daß dieser aufgrund seiner Elastizität im Rahmen der Herstellung des erfindungsgemäßen Formteils 6 unter Verwendung des erfindungsgemäßen Werkstoffteils 1 in die gewünschte Form gebracht werden kann. Denn vorzugsweise wird die Zwischenschicht 5 und/oder das Flächenmaterial 4 von dem Träger 3 gewissermaßen in der resultierenden Endform gehalten.

Die Zwischenschicht 5, insbesondere die Schaumstoffschicht, kann erfindungsgemäß bevorzugt ein geschlossenporiger bzw. geschlossenzelliger Schaumstoff sein, welcher im allgemeinen eine geringere Komprimierbarkeit als offenporige Schäume aufweist und bei Verwendung des erfindungsgemäßen Werkstoffteils 1 bzw. Formteils 6 eine optimale elastische und reversible Komprimierbarkeit unter Belastung aufweist. Beispielsweise liegt unter Beanspruchung bei einer Sitzbelastung ("Hinsetzen") eine Komprimierung des Schaumstoffs vor, so daß aufgrund der guten Anpassung an den Benutzer ein angenehmes und bequemes Sitzgefühl resultiert, während nach Belastung ("Aufstehen") der Schaumstoff seine ursprüngliche Dicke wieder einzunehmen imstande ist.

Die Zwischenschicht 5, insbesondere die Schaumstoffschicht, kann eine Dicke von 1 mm bis 50 mm, insbesondere 2 mm bis 40 mm, vorzugsweise 3 mm bis 30 mm, bevorzugt 4 mm bis 25 mm, besonders bevorzugt 5 mm bis 20 mm, aufweisen, wobei die Dicke - in Abhängigkeit von dem gewünschten Einsatzbereich - in weiten Bereichen variieren und gegebenenfalls von den angegebenen Bereichen abweichen kann. Was die Rohdichte der Zwischenschicht 5, insbesondere der Schaumstoffschicht, anbelangt, so kann diese 5 bis 250 kg/m³, insbesondere 10 bis 150 kg/m³, vorzugsweise 20 bis 100 kg/m³, bevorzugt 25 bis 95 kg/m³, betragen.

Was die Zwischenschicht 5 anbelangt, so kann es sich hierbei - wie bereits geschildert - um eine Schaumstoffschicht bzw. um eine Schicht aus einem geschäumten Material handeln. Das diesbezüglich verwendete Schaumstoffmaterial kann eine Zugfestigkeit in Quer- und/oder Längsrichtung gemäß ISO 1926 von 100 bis 1.500 kPa, insbesondere 150 bis 1.300 kPa, vorzugsweise 100 bis 1.100 kPa, aufweisen; mit anderen Worten sollte das Material der Zwischenschicht 5, insbesondere das Schaumstoffmaterial, eine Zugfestigkeit gemäß der vorgenannten Norm in Längs- und/oder Querrichtung von mindestens 100 kPa, insbesondere mindestens 150 kPa, vorzugsweise mindestens 200 kPa, aufweisen.

Weiterhin sollte das Schaumstoffmaterial für die Zwischenschicht 5 eine Bruchdehnung in Längs- bzw. Querrichtung gemäß ISO 1926 von 50 bis 350 %, insbesondere 65 bis 325 %, vorzugsweise 80 bis 300 %, aufweisen; mit anderen Worten sollte das Schaumstoffmaterial für die Zwischenschicht 5 somit eine Bruchdehnung gemäß der vorgenannten Norm in Längs- bzw. Querrichtung von mindestens 50 %, insbesondere mindestens 65 %, vorzugsweise mindestens 80 %, aufweisen. Was die Stauchhärte gemäß ISO 844 des Schaumstoffmaterials für die Zwischenschicht 5 anbelangt, so sollte diese bei einer Stauchung von 10 % mindestens 5 kPa, insbesondere mindestens 10 kPa, vorzugsweise mindestens 15 kPa, bei einer Stauchung von 25 % mindestens 25 kPa, insbesondere mindestens 30 kPa, vorzugsweise mindestens 35 kPa, bei einer Stauchung von 50 % mindestens 85 kPa, insbesondere mindestens 90 kPa, vorzugsweise mindestens 95 kPa, betragen. Was die Druckverformungsresistenz gemäß ISO 1856/C bei einer Belastung von 22 Stunden und einer Stauchung von 25 % bei 23 °C betrifft, so sollte das Schaumstoffmaterial der Zwischenschicht 5 0,5 Stunden nach Entlastung eine Druckverformungsresistenz von höchstens 30 %, insbesondere höchstens 25 %, vorzugsweise höchstens 20 %, und 24 Stunden nach Entlastung einen Wert von höchstens 20 %, insbesondere höchstens 15 %, vorzugsweise höchstens 10 %, aufweisen. Schließlich sollte das Schaumstoffmaterial für die Zwischenschicht 5 einen µ-Wert gemäß ISO 1663 bei 0 bis 85 % relativer Feuchte und 23 °C von 3.000 bis 20.000, insbesondere 3.500 bis 19.000, vorzugsweise 4.000 bis 18.000, aufweisen.

Erfindungsgemäß bevorzugt können für die Zwischenschicht 5 die unter dem Handelsnamen Alveolit® und Alveolen® vertriebenen Schaumstoffe der Alveo AG, Luzern, Schweiz, eingesetzt werden, welche sich besonders zum Thermoformen und insbesondere zum Vakuumformen (d. h. Vakuumthermoformen) eignen.

Wie die Fig. 1B zeigt, kann es erfindungsgemäß gleichermaßen vorgesehen sein, daß der Träger 3 auf der dem Flächenmaterial 4 abgewandten Seite mindestens ein dem Träger 3 zugeordnetes, insbesondere textiles Flächenmaterial 4' aufweist, insbesondere wobei das Flächenmaterial 4' auf den Träger 3 auflaminiert ist. Zudem kann es erfindungsgemäß vorgesehen sein, daß auf der dem Flächenmaterial 4 abgewandten Seite zwischen dem Träger 3 und dem Flächenmaterial 4' eine flächige Zwischenschicht 5', insbesondere Schaumstoffschicht, angeordnet ist. Für diesen Fall kann das Flächenmaterial 4' auf die Zwischenlage 5' auflaminiert und die Zwischenschicht 5' mit dem Träger 3 insbesondere flächig verbunden sein. Gemäß dieser erfindungsgemäßen Ausführungsform resultiert somit eine Verbund- bzw. Sandwichstruktur, bei welcher der Träger 3 gewissermaßen die Kernschicht darstellt, auf welchem beidseitig weitere Schichten aufgebracht sind. Dabei können grundsätzlich zum Flächenmaterial 4 bzw. zur Zwischenschicht 5 gleiche oder verschiedene Materialien für das Flächenmaterial 4' bzw. für die Zwischenschicht 5' eingesetzt werden. Was die Fixierung der Zwischenschicht 5' bzw. des Flächenmaterials 4' anbelangt, so kann auf obige Ausführungen betreffend das Flächenmaterial 4 bzw. die Zwischenschicht 5 verwiesen werden, die diesbezüglich entsprechend gelten.

Des weiteren betrifft die vorliegende Erfindung - gemäß einem **zweiten** Aspekt der vorliegenden Erfindung - ein in Fig. 2 beispielhaft dargestelltes Formteil 6, insbesondere für die Herstellung von Möbeln, wie Sitzmöbeln und dergleichen, welches durch Umformen, insbesondere Thermoformen, mindestens eines Werkstoffteils 1, insbesondere wie zuvor beschrieben, erhältlich bzw. hergestellt ist. Wie zuvor angeführt, kann das Formteil 6 somit durch Thermoformen, wie Tiefziehen, Vakuumformen, Vakuum-Tiefziehformen und dergleichen, hergestellt sein, wobei durch das Umformen unter Erwärmen ("Thermoformen") eine dreidimensionale Strukturgebung in bezug auf das Formteil 6 erfolgt, insbesondere um dieses mit einer technischen bzw. mechanischen Funktion, statischen Eigenschaften, einer Stabilisierung und dergleichen auszustatten. Zum Erreichen bzw. zur Verbesserung dieser Eigenschaften kann es vorgesehen sein, daß das erfindungsgemäße Formteil 6 zudem mit weiteren Verbundsystemen verbunden ist bzw. eine Integration mit anderen Verbundsystemen realisiert ist. So kann beispielsweise eine Verklebung von mindestens zwei erfindungsgemäßen Formteilen 6 bzw. mit Werkstoffteilen 1 vorgesehen sein.

Eine zentrale Besonderheit des erfindungsgemäßen Formteils 6, welches durch Umformen des Werkstoffteils 1 nach der Erfindung erhältlich ist, ist darin zu sehen, daß das dem Träger 3 des Werkstoffteils 1 zugeordnete Flächenmaterial 4 **vor** dem Umformen bzw. **während** des Umformens des Werkstoffteils 1 zu dem Formteil 6 auf den Träger 3 auflaminiert ist. Was die zuvor beschriebene Drei-Schicht-Struktur oder mehrschichtige Struktur des Werkstoffteils 1 anbelangt, so ist eine weitere Besonderheit der vorliegenden Erfindung darin zu sehen, daß das Formteil 6 eine zwischen dem Träger 3 und dem Flächenmaterial 4 des Werkstoffteils 1 angeordnete Zwischenschicht 5, insbesondere Schaumstoffschicht aufweisen kann, welche ebenfalls vor dem Umformen bzw. während des Umformens mit dem Träger 3 insbesondere flächig verbunden ist, wobei für diesen Fall das Flächenmaterial 4 vor dem Umformen bzw. während des Umformens auf die Zwischenschicht 5 auflaminiert ist. Mit anderen Worten basiert das erfindungsgemäße Formteil 6 auf einem Werkstoffteil 1 nach der vorliegenden Erfindung, welches bereits vor Umformen sämtliche Schichten des umgeformten erfindungsgemäßen Formteils 6 aufweist, wobei die einzelnen Schichten vor dem Umformen bzw. während des Umformens in das erfindungsgemäße Formteil 6 miteinander verbindbar sind, so daß ein nachträgliches Aufbringen von Schichten nach erfolgter Umformung erfindungsgemäß nicht erforderlich ist.

Folglich ist - wie zuvor angeführt - in bezug auf das erfindungsgemäße Formteil 6 eine besonders stark ausgeprägte dreidimensionale Form bzw. Struktur realisierbar. Daß die einzelnen Schichten grundsätzlich vor oder während der Umformung des Werkstoffteils 1 zu dem Formteil 6 zusammengefaßt sind, gilt auch für die optional vorgesehene Zwischenschicht 5' und dem ebenfalls optional vorgesehenen Flächenmaterial 4'. Insgesamt resultiert ein Formteil 6, das ohne weitere Arbeitsschritte eine endfertige Sicht- bzw. Oberfläche aufweist.

Mit anderen Worten betrifft die vorliegende Erfindung somit ein Formteil 6, das insbesondere für die Herstellung von Möbeln, wie Sitzmöbeln und dergleichen, eingesetzt werden kann, wobei das Formteil 6 eine dreidimensionale Form bzw. Struktur, insbesondere Wölbungen, Vertiefungen, Ausbuchtungen, Biegungen oder dergleichen, aufweist, wobei das Formteil 6 einen mehrschichtigen Aufbau 2 mit einem Träger 3 aus einem thermoplastischen Material und einem dem Träger 3 zugeordneten, insbesondere textilen Flächenmaterial 4 aufweist, wobei das Flächenmaterial 4 auf den Träger 3 auflaminiert ist.

Zudem betrifft die vorliegende Erfindung gemäß dem zweiten Aspekt der vorliegenden Erfindung alternativ ein Formteil 6, insbesondere für die Herstellung von Möbeln, wie Sitzmöbeln und dergleichen, wobei das Formteil 6 eine dreidimensionale Form bzw. Struktur, insbesondere wie zuvor definiert, aufweist, wobei das Formteil 6 einen mehrschichtigen Aufbau 2 mit einem Träger 3 aus einem thermoplastischen Material und einem dem Träger 3 zugeordneten, insbesondere textilen Flächenmaterial 4 und eine zwischen dem Träger 3 und dem Flächenmaterial 4 angeordnete flächige Zwischenschicht 5, insbesondere Schaumstoffschicht, aufweist, wobei das Flächenmaterial 4 auf die Zwischenschicht 5 auflaminiert ist und die Zwischenschicht 5 mit dem Träger 3 verbunden ist. Diesbezüglich gelten die vorstehenden Ausführungen zu dem erfindungsgemäßen Werkstoffteil 1 entsprechend auch für das erfindungsgemäße Formteil 6.

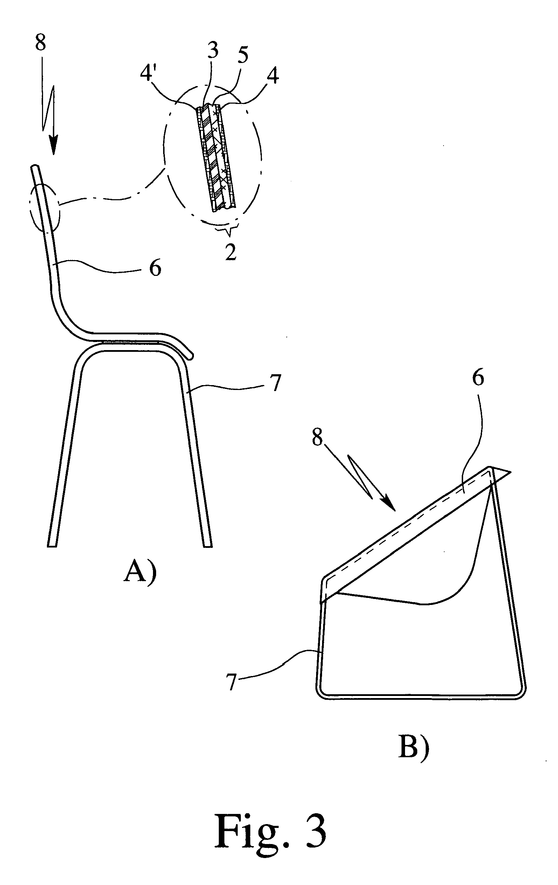

Was das erfindungsgemäße Formteil 6 betrifft, so kann dieses gewissermaßen in einer für den jeweiligen Anwendungszweck geeigneten Endform, insbesondere für Möbel 8, wie Sitzmöbel - z. B. gemäß den Fig. 3A und Fig. 3B -, vorliegen, beispielsweise als Flächen- bzw. Formelement einer Unter- bzw. Rückseite eines Sitz- oder Rückenteils oder als vollständige Sitzschale eines Sitzmöbels, wobei das erfindungsgemäße Formteil 6 zusätzlich mit statischen Elementen 7 (d. h. Stützen, Halterungen, Verbindungselemente, Gestänge, Stuhlbeine etc.) ausgerüstet werden kann.

Was die Ausrüstung des erfindungsgemäßen Formteils 6 mit zusätzlichen statischen Elementen 7 anbelangt, so können nach erfolgter Umformung Halte- bzw. Fixierpunkte für die vorgenannten Elemente 7, beispielsweise mittels Bohrungen, eingebracht sein.

Gemäß einer besonderen Ausführungsform kann das erfindungsgemäße Formteil 6 derart ausgebildet sein, daß es einen als Kern fungierenden Thermoplasten aufweist, welcher auf einer Seite mit einem Spezialschaum, beispielsweise Trocellen® und einem Stoff beschichtet ist, während die dem Spezialschaum und Stoff abgewandte Seite eine erste Schicht eines Schaums oder Gels umfaßt, die wiederum mit einem Spezialschaum beaufschlagt ist, beispielsweise Trocellen® , welcher wiederum mit einem Stoff beschichtet ist. Somit resultiert diesbezüglich eine Struktur mit folgendem Schichtaufbau: Stoff/Spezialschaum/Thermoplast/Schaum (Gel)/Spezialschaum/Stoff.

Weiterhin betrifft die vorliegenden Erfindung - gemäß einem **dritten** Aspekt der vorliegenden Erfindung - die Verwendung des erfindungsgemäßen Formteils 6, insbesondere wie zuvor definiert, zur Herstellung von Einrichtungsgegenständen bzw. Möbeln, insbesondere Sitzmöbeln 8, wie sie beispielhaft in den Fig. 3A und 3B dargestellt sind. Grundsätzlich können die Einrichtungsgegenstände zu Zwecken einer Innengestaltung gewissermaßen als Interieur sowie zu Zwecken einer Außengestaltung gewissermaßen als Exterieur eingesetzt werden.

Im Rahmen der vorliegenden Erfindung ist der Begriff "Sitzmöbel" sehr breit zu verstehen: So betrifft der Begriff "Sitzmöbel" Sitzgelegenheiten bzw. Sitzelemente aller Art, wie beispielsweise und in nichtbeschränkender Weise Bänke, Stühle, Sessel, Sofas, Couchgarnituren, Hocker und dergleichen. Dabei kann das Sitzmöbel dergestalt sein, daß es aus einem Formteil 6 besteht oder mindestens ein Formteil 6 aufweist.

Erfindungsgemäß kann das Formteil 6 bestimmte Einheiten des Sitzmöbels 8 bilden, wie beispielsweise ein einstückiges Sitz/Rücken-Teil ("Sitzschale"). Alternativ können z. B. auch zwei in dem Fachmann an sich bekannter Weise miteinander verbundene Formteile 6 jeweils die Vorder- und Rückseite eines Sitz/Rücken-Teils oder einer Sitzschale ausbilden. Gleichermaßen liegt es im Rahmen der vorliegenden Erfindung, wenn das Formteil 6 die Vorder- und/oder Rückseite eines Sitzteils und/oder die Vorder- und/oder Rückseite eines Rückenteils eines Sitzmöbels 8 bildet. Dabei können die jeweiligen für die entsprechende Vorderseite bzw. Rückseite verwendeten Formteile 6 unterschiedlich ausgebildet sein; beispielsweise kann das Formteil 6, welches die Vorderseite eines Sitz- und/oder Rückenteils eines Sitzmöbels 8 bildet, zur Erhöhung des Sitzkomforts eine dickere Schaumstoffschicht bzw. Zwischenschicht 5 aufweisen als das entsprechende Formteil 6 für die Rückseite. Erfindungsgemäß bedeutet der Begriff "Vorderseite" die dem Benutzer des Sitzmöbels zugewandte Seite des Sitzmöbels, während der Begriff "Rückseite" sich auf die im Benutzungszustand des Sitzmöbels dem Benutzer abgewandte Seite bezieht.

Zudem ist es auch möglich, daß das erfindungsgemäße Formteil 6 weitere Elemente des Sitzmöbels 8, wie beispielsweise Lehnen, Bein- bzw. Wadenstützen bei Sesseln, Kopfstützen und dergleichen, ausbildet. Im Rahmen der vorliegenden Erfindung ist es gleichermaßen möglich, das erfindungsgemäße Werkstoffteil 1 ohne weiteres Umformen für Sitzmöbel zu verwenden, beispielsweise zur Ausbildung von Rücken- und/oder Sitzbereichen oder dergleichen.

Weiterhin kann das erfindungsgemäße Formteil 6 beispielsweise auch für Sättel, insbesondere Fahrradsättel und dergleichen verwendet werden, insbesondere da das erfindungsgemäße Formteil 6 z. B. starke Biegungen bzw. ausgeformte Bereiche aufweisen kann, so daß problemlos eine Anpassung des aus dem erfindungsgemäßen Formteil 6 hergestellten Sattels an die Anatomie des Benutzers erfolgen kann. Ein weiterer Anwendungsbereich des erfindungsgemäßen Formteils 6 ist beispielsweise dessen Verwendung für Sitzmöbel in öffentlichen Verkehrsmitteln, da aufgrund der zuvor beschriebenen, spezifischen Schichtstruktur mit der flächigen Laminierung eine hohe Schmutzresistenz resultiert, da Verschmutzungen nicht tief in das Material eindringen können, und andererseits aufgrund der festen Verklebung der einzelnen Schichten eine hohe Schutzfunktion vor Zerstörungen, beispielsweise durch Vandalismus, resultiert, da das flächig auflaminierte, insbesondere textile Flächenmaterial 4 gewissermaßen durch die darunter liegende Schicht stabilisiert ist, so daß es hierdurch eine gewisse Schnittresistenz bzw. Widerstandskraft z. B. gegen Durchstechen aufweist.

Zudem kann das erfindungsgemäße Formteil 6 als dekoratives Element beispielsweise in Form von Kabelverkleidungen, Trennwänden, Abdeckungen und dergleichen verwendet werden. Grundsätzlich kann das erfindungsgemäße Formteil 6 zu Zwecken einer Innengestaltung gewissermaßen als Interieur sowie zu Zwecken einer Außengestaltung gewissermaßen als Exterieur eingesetzt werden.

Gemäß einem weiteren, **vierten** Aspekt der vorliegenden Erfindung betrifft die vorliegende Erfindung gleichermaßen Möbel, insbesondere Sitzmöbel 8, welche mindestens ein Formteil 6 nach der vorliegenden Erfindung, insbesondere wie zuvor definiert, bzw. mindestens ein Werkstoffteil 1 nach der vorliegenden Erfindung, insbesondere wie zuvor definiert, aufweisen.

Fig. 3A und B zeigen veranschaulichend und in nichtbeschränkender Weise zwei erfindungsgemäße Sitzmöbel 8, welche als Stühle ausgebildet sind. Gemäß Fig. 3A bildet das erfindungsgemäße Formteil 6 ein einheitliches Sitz- und Rückenteil, wobei das diesbezüglich verwendete erfindungsgemäße Formteil 6 aus einem erfindungsgemäßen Werkstoffteil 1 durch Umformen hergestellt ist und - wie die Ausschnittsvergrößerung von Fig. 3A veranschaulicht - einen Schichtaufbau 2 mit einer Kernschicht aus einem thermoformbaren, thermoplastischen Träger 3 aufweist, auf welchem insbesondere zur Erhöhung des Sitzkomforts auf der Vorderseite eine Zwischenschicht 5 aus einem Schaumstoffmaterial auflaminiert ist, auf welche wiederum ein textiles Flächenmaterial 4 aufgebracht ist. Auf der dem textilen Flächenmaterial 4 und der Zwischenschicht 5 abgewandten Seite des Trägers 3 ist ein weiteres textiles Flächenmaterial 4' - insbesondere zu dekorativen Zwecken - auflaminiert; diese Seite bildet die Rückseite des Sitz/Rücken-Teils des Sitzmöbels 8. Zur optischen Aufwertung kann der Rand des Formteils 6 beispielsweise mit einer Profilleiste versehen sein (nicht dargestellt).

Das Formteil 6 kann einen Befestigungs- bzw. Verbindungsbereich (nicht dargestellt) aufweisen, an welchem beispielsweise weitere statische Elemente 7, wie eine Trägereinheit bzw. "Stuhlbeine", befestigt werden können. Diesbezüglich können die Befestigungsabschnitte bei der Herstellung des erfindungsgemäßen Werkstoffteils 1 bzw. dessen Umformung zu dem erfindungsgemäßen Formteil 6 gewissermaßen mitgeformt werden, so daß sie durch das erfindungsgemäße Werkstoffteil 1 bzw. das erfindungsgemäße Formteil 6 selbst gebildet werden.

Fig. 3B zeigt die Seitenansicht eines weiteren erfindungsgemäßen Stuhles 8, welcher als Sesselstuhl gestaltet ist, wobei das erfindungsgemäße Formteil 6 derart ausgebildet ist, daß an dessen Rand bzw. "Lehnenbereich" eine Einbuchtung bzw. Vertiefung zur Aufnahme eines Trägerelements 7, welches beispielsweise ein entsprechend gebogenes Stahlrohr sein kann, resultiert.

Schließlich ist ein weiterer erfindungsgemäßer Gegenstand - gemäß einem **fünften** Aspekt der vorliegenden Erfindung - ein Verfahren zur Herstellung eines Formteils 6, insbesondere für die Herstellung von Möbeln, wie Sitzmöbeln und dergleichen, welches die folgenden Verfahrensschritte umfaßt:
a) Bereitstellung eines umformbaren, insbesondere thermoformbaren, plattenförmigen Werkstoffteils 1, insbesondere wie zuvor definiert, mit mehrschichtigem Aufbau 2, aufweisend einen umformbaren, insbesondere thermoformbaren plattenförmigen Träger 3 aus einem thermoplastischen Material und ein dem Träger 3 zugeordnetes, insbesondere textiles Flächenmaterial 4 und gegebenenfalls eine zwischen dem Träger 3 und dem Flächenmaterial 4 angeordnete flächige Zwischenschicht 5; anschließend
b) Umformen des Werkstoffteils 1 zum Erhalten des Formteils 6 mit einer dreidimensionalen Form bzw. Struktur, insbesondere Wölbungen, Vertiefungen, Ausbuchtungen, Biegungen oder dergleichen.

Mit anderen Worten wird ein Verfahren zur Herstellung eines wie zuvor beschriebenen Formteils 6, welches sich insbesondere für die Herstellung von Möbeln, wie Sitzmöbeln und dergleichen eignet, bereitgestellt, bei dem ein wie zuvor beschriebenes Werkstoffteil 1 mit an sich bekannten Umformungsverfahren zu dem entsprechenden Formteil 6, wie zuvor beschrieben, umgeformt wird.

Was das Umformen des Werkstoffteils 1 zum Erhalt des Formteils 6 betrifft, so können dem Fachmann an sich bekannte Umformverfahren eingesetzt werden, wobei es sich diesbezüglich insbesondere um sogenannte Thermoformverfahren ("Thermoformen") handelt. Hierzu können beispielsweise dem Fachmann an sich bekannte Verfahren, wie Tiefziehen, Vakuumformen, Vakuum-Tiefziehformen und dergleichen, eingesetzt werden, wobei das Werkstoffteil 1 vor und/oder während der Umformung erwärmt wird ("Thermoformen"), insbesondere oberhalb der Erweichungstemperatur des Trägers 3. Im Rahmen der vorliegenden Erfindung wird das entsprechende Umformverfahren vor dem Hintergrund eingesetzt, dem erfindungsgemäßen Werkstoffteil 1 eine zum Erhalt des erfindungsgemäßen Formteils 6 vorgegebene dreidimensionale Form bzw. Struktur zu verleihen, so daß das resultierende Formteil 6 statische bzw. technische Funktionen übernehmen kann. Was die jeweiligen zu diesem Zweck geeigneten Umformverfahren betrifft, so ist der Fachmann jederzeit in der Lage, diese entsprechend auszuwählen und in bezug auf das umzuformende Werkstoffteil entsprechend anzupassen.

Im Rahmen des Thermoformens kann beispielsweise zunächst eine Erwärmung des Werkstoffteils 1 auf eine Verformungs- bzw. Erweichungstemperatur, beispielsweise mittels einer Strahlungs- oder Kontaktheizung oder in heißer Luft, erfolgen, so daß das Werkstoffteil 1 erweicht und somit umformbar wird. Anschließend kann das Werkstoffteil 1 beispielsweise mittels Tiefziehen, was ein sogenanntes Zugdruckumformverfahren darstellt, zu dem gewünschten Formteil 6 umgeformt werden. Das Tiefziehen kann beispielsweise und in nichtbeschränkender Weise mittels eines Stempels oder mittels einer Ober- und Gegenform (Formstanzen) durchgeführt werden. Letzteres führt zu geringeren Maßtoleranzen.

Darüber hinaus kann das Thermoformen mittels Vakuumformen erfolgen, welches dem Fachmann ebenfalls wohlbekannt ist. Diesbezüglich kann das Werkstoffteil beispielsweise mit Hilfe eines Spannrahmens luftdicht eingespannt werden und anschließend beispielsweise mittels Infrarotstrahler erwärmt und über eine feste Form gezogen werden bzw. mittels Vakuum und/oder Druck in eine feste Form gezogen bzw. gedrückt werden, wobei die Form als Negativ- oder Positivform ausgebildet sein kann. Nach Abkühlung und Aushärtung kann das Formteil anschließend aus der Form entnommen werden.

Das erfindungsgemäße Verfahren zeichnet sich dadurch aus, daß das Flächenmaterial 4 **vor** der Durchführung der Verfahrensschritte a) und b) oder aber **während** des Umformens in Verfahrensschritt b) auf den Träger 3 auflaminiert wird. Mit anderen Worten wird somit ein bereits zumindest im wesentlichen fertiggestelltes Material 1 mit mehrschichtigem Aufbau bzw. Schichtstruktur 2 einem nachfolgenden Umformungsprozeß bzw. -verfahren unterzogen werden. Dabei ist es erfindungsgemäß möglich, die Schichtstruktur 2 vor dem Umformen oder aber während des Umformens auszubilden, d. h. die jeweiligen Schichten 3, 4, 5 werden im letztgenannten Fall während des Umformens insbesondere flächig miteinander verbunden, vorzugsweise laminiert. Somit besitzt das für die Umformung verwendete Werkstoffteil 1 bereits sämtliche Schichten des daraus nach Umformung resultierenden Formteils 6. Durch das Umformverfahren wird folglich gewissermaßen "lediglich" im wesentlichen die Form des Werkstoffteils 1 verändert bzw. die Schicht-struktur 2 durch Verbinden, insbesondere Laminieren, der entsprechenden Schichten 3, 4, 5 verfestigt. Durch die spezielle erfindungsgemäße Maßnahme, daß das Flächenmaterial 4 vor oder während der Durchführung der Verfahrensschritte a) und b) auf den Träger 3 auflaminiert wird, ist es demnach gerade möglich, starke Biegungen hinsichtlich des resultierenden Formmaterials ohne Delaminierung und ohne Faltenbildung des Flächenmaterials 3 bzw. der optionalen Zwischenschicht 5 herzustellen.

Somit kann das Flächenmaterial 4 während des Umformens in Verfahrensschritt b) auf den Träger 3 auflaminiert werden. Hierdurch ist das Flächenmaterial 4 beim Umformen gewissermaßen in bezug auf den Träger 3 an dessen Oberfläche frei bewegbar und somit sozusagen auf dem Träger 3 verschiebbar, so daß die jeweiligen Schichten aufeinander gleiten können. Dabei liegt es im Rahmen der vorliegenden Erfindung, wenn das Flächenmaterial 4 über einzelne, insbesondere kreis- oder punktförmige Fixierabschnitte an wenigen Stellen mit dem Träger 3 verbunden, insbesondere vorlaminiert, ist, um eine Delamination vor dem Umformen zu verhindern.

Erfindungsgemäß kann es gemäß einer bevorzugten Ausführungsform vorgesehen sein, daß das Flächenmaterial 4 mittels eines Klebstoffs, insbesondere eines Schmelzklebstoffs, vorzugsweise eines Schmelzkleberwebs, auf den Träger 3 auflaminiert wird.

Gleichermaßen ist es im Rahmen des erfindungsgemäßen Verfahrens möglich, daß vor Durchführung der Verfahrensschritte a) und b) oder aber des Umformens in Verfahrensschritt b) zwischen dem Träger 3 und dem Flächenmaterial 4 eine flächige Zwischenschicht 5, insbesondere Schaumstoffschicht, angeordnet wird. Dabei kann das Flächenmaterial 4 auf die Zwischenschicht 5 auflaminiert und die Zwischenschicht 5 mit dem Träger 3 insbesondere flächig verbunden werden. Das Verbinden des Trägers 3 mit der Zwischenschicht 5 bzw. der Zwischenschicht 5 mit dem Flächenmaterial 4 kann in zuvor beschriebener Art und Weise durchgeführt werden. Auch das flächige Verbinden der Zwischenschicht 5 auf den Träger 3 sowie das Auflaminieren des Flächenmaterials 4 auf die Zwischenschicht 5 vor oder während der Durchführung der Verfahrensschritte a) und/oder b) führt zu den zuvor genannten Vorteilen, wie Realisierung großer Biegungen unter Vermeidung von Faltenbildung bzw. Delaminierung. Dies setzt insbesondere eine gewisse Elastizität der einzelnen Komponenten bzw. Schichten 3 und 5 voraus.

Bei der Herstellung des für das Formteil 6 verwendeten Werkstücks 1 kann prinzipiell derart verfahren werden, daß zunächst die optionale Zwischenschicht 5 auf den Träger 3 aufgebracht wird bzw. mit diesem flächig verbunden wird, beispielsweise mittels der zuvor beschriebenen Laminier- bzw. Kaschierverfahren (z. B. Aufwalzen, Aufdrücken, Kalandrieren und dergleichen), und anschließend das Flächenmaterial 4 auf die Zwischenschicht 5 auflaminiert wird. Gleichermaßen ist es aber auch möglich, daß die Zwischenschicht 5 und das Flächenmaterial 4 gleichzeitig aufgebracht werden. Sofern auf der der Zwischenschicht 5 bzw. dem Flächenmaterial 4 abgewandten Seite eine weitere Zwischenschicht 5' bzw. ein Flächenmaterial 4' vorgesehen ist, so können auch diese gleichzeitig bzw. nacheinander aufgebracht werden.

Gemäß einer alternativen Ausführungsform kann das Flächenmaterial 4 während des Umformens in Verfahrensschritt b) auf die Zwischenschicht 5 auflaminiert werden. Diesbezüglich kann die Zwischenschicht 5 während des Umformens in Verfahrensschritt b) mit dem Träger 3 verbunden, insbesondere flächig verbunden, vorzugsweise laminiert, werden. Denn es wurde völlig überraschend gefunden, daß sich besonders gute Umformergebnisse realisieren lassen, wenn während des Formgebungsverfahrens bzw. Umformens die einzelnen Schichten, insbesondere das Flächenmaterial 4 und/oder die Zwischenschicht 5 in bezug auf den Träger 3 gewissermaßen frei bewegbar und somit sozusagen auf dem Träger 3 frei verschiebbar ist bzw. sind, so daß die jeweiligen Schichten aufeinander gleiten können. Denn hierdurch wird während des Umformens ein "Nachfließen" bzw. "Nachgleiten" des Flächenmaterials 4 bzw. der Zwischenschicht 5 ermöglicht, wodurch verhindert wird, daß einzelne Schichten, insbesondere das Flächenmaterial 4 und/oder die Zwischenschicht 5, beim Umformen einer übermäßigen Beanspruchung durch Dehnen und/oder Stauchen ausgesetzt werden. Auf diese Weise wird einer Faltenbildung, Delamination und/oder einer Rißbildung bzw. einem Zerreißen entgegengewirkt.

Zudem liegt es im Rahmen der vorliegenden Erfindung, wenn der gesamte Schichtverbund 2 oder aber auch einzelne Schichten während des Umformens miteinander verbunden werden. Diesbezüglich können die Schichten zuvor mit einem Laminier- bzw. Kaschiermittel beaufschlagt werden. Gleichermaßen können einzelne Schichten bereits vor dem Umformen, insbesondere mittels Laminierung, miteinander verbunden sein (z. B. Flächenmaterial 4 und Zwischenschicht 5 oder Zwischenschicht 5 und Träger 3). Beim Umformen werden die Laminate dann mit der verbleibenden Schicht dauerhaft verbunden, insbesondere laminiert.

Gemäß einer weiteren Ausführungsform können der Träger 3, das Flächenmaterial 4 und gegebenenfalls die Zwischenschicht 5 zumindest teilweise vor Durchführung der Verfahrensschritte a) und b) laminiert werden, insbesondere wobei während der Umformung in Verfahrensschritt b) die Umformtemperatur derart ausgewählt wird, daß im Falle eines Laminierens mit einem Laminier- bzw. Kaschiermittel das Laminier- bzw. Kaschiermittel, insbesondere der Klebstoff, vorzugsweise Schmelzklebstoff, besonders bevorzugt das Schmelzkleberweb, in einen flüssigen, insbesondere zähflüssigen, bzw. in einen hitzeklebrigen Zustand gebracht wird. Alternativ können im Falle eines Laminierens ohne Laminier- bzw. Kaschiermittel mindestens eine Oberfläche des Trägers 3 und/oder des textilen Flächenmaterials 4 und/oder gegebenenfalls der Zwischenschicht 5 hitzeklebrig werden, so daß bei dem Umformen in Verfahrensschritt b) die Schichten 3, 4, 5 gegeneinander verschiebbar sind. Denn auch bei dieser erfindungsgemäßen Ausführungsform sind die einzelnen Schichten, insbesondere das Flächenmaterial 4 und/oder die Zwischenschicht 5 in bezug auf den Träger 3 beim Umformen gewissermaßen frei beweglich und somit sozusagen auf dem Träger 3 frei verschiebbar, so daß während des Umformens ein "Nachfließen" bzw. "Nachgleiten" des Flächenmaterials 4 bzw. der Zwischenschicht 5 ermöglicht und einer Faltenbildung, Delamination bzw. einem Reißen entgegengewirkt wird.

Weiterhin wurde völlig überraschend gefunden, daß unter Verwendung eines erfindungsgemäßen Werkstoffteils 1, bei welchem das Flächenmaterial 4 und/oder die Zwischenschicht 5 flächenbezogen kleiner dimensioniert als der Träger 3 ist bzw. sind - so daß sich der Träger 3 dann gewissermaßen über mindestens einen Rand des Flächenmaterials 4 und/oder des Trägers 5 erstreckt - besonders gute Umfonnungseigenschaften ergeben. Üblicherweise wird zu Zwecken der Umformung des Werkstoffteils 1 ein dem Fachmann zu Zwecken der Umformung an sich bekannter Rahmen bzw. Spannrahmen zur Aufnahme des Werkstoffteils 1 verwendet, wobei das Werkstoffteil 1 insbesondere an dessen Randbereichen fixiert bzw. eingespannt wird. Insbesondere dient der Rahmen der Halterung und/oder der Vorstreckung bzw. -dehnung des Werkstoffteils 1. Überraschenderweise wurde nun gefunden, daß sich besonders gute Ergebnisse hinsichtlich der Umformung des Werkstoffteils 1 realisieren lassen, wenn das Flächenmaterial 4 und/oder die Zwischenschicht 5 nicht vom (Spann-)Rahmen erfaßt bzw. fixiert wird. Dies kann einerseits durch die geringere Dimensionierung des Flächenmaterials 4 und/oder der Zwischenschicht 5 im Vergleich zu dem Träger 3 oder aber durch das zuvor beschriebene Nichtlaminieren der Randbereiche des Schichtaufbaus 2 oder aber durch einen geringeren Anpreßdruck des Rahmens in bezug auf das Werkstoffteil 1 realisiert werden. Durch das Nichterfassen der Randbereiche des Flächenmaterials 4 und/oder der Zwischenschicht 5 wird während des Umformens des Werkstoffteils 1 ein besonders gutes "Nachfließen" bzw. "Nachgleiten" des Flächenmaterials 4 und/oder der Zwischenschicht 5 erreicht.

Wie zuvor angeführt, kann das Umformen in Verfahrensschritt b) mittels dem Fachmann an sich bekannter Formgebungsverfahren, insbesondere Thermoformen, vorzugsweise auch Tiefziehen, Vakuumformen, Vakuumtiefziehformen und dergleichen, durchgeführt werden. Schließlich kann es im Rahmen des erfindungsgemäßen Verfahrens auch vorgesehen sein, daß das Werkstoffteil 1 in Verfahrensschritt a) bzw. das Formteil 6 in bzw. nach Verfahrensschritt b) zusätzlich mit mindestens einem statischen Element ausgestattet wird. Dabei können z. B. statische Elemente, wie Profile und dergleichen, in die Form eingearbeitet bzw. integriert werden, was beispielsweise zu einer gezielten Erhöhung der Stabilität führt. Diesbezüglich kann auf die obigen Ausführungen betreffend das erfindungsgemäße Formteil 6 verwiesen werden.

Das erfindungsgemäße Werkstoffteil bzw. Formteil, sowie die daraus hergestellten Möbel sowie das Verfahren zur Herstellung des erfindungsgemäßen Formteils weisen zahlreiche Vorteile auf, von denen rein beispielhaft die folgenden genannt werden sollen:
- Aufgrund des speziellen Schichtaufbaus mit einem thermoplastischen und vorzugsweise massiven Träger weisen die erfindungsgemäßen Werkstoffteile bzw. Formteile eine hohe Stabilität auf, so daß sie für zahlreiche Anwendungen anwendbar sind, beispielsweise zur Verwendung in oder als Sitzmöbel. Dabei ist durch die individuelle Ausgestaltung der einzelnen Schichten eine hohe Variation und Beeinflussung der jeweiligen Produkteigenschaften möglich - bei gleichzeitig hoher Attraktivität und individueller Gestaltbarkeit der Oberfläche (Stoffbezug).
- Aufgrund des erfindungsgemäßen Prinzips, wonach das insbesondere textile Flächenmaterial bzw. die Zwischenschicht **vor** dem Umformen bzw. **während** des Umformens des Werkstoffteils auf den thermoplastischen Träger laminiert werden, wird ein gewissermaßen fertig ausgestaltetes Produkt dem Umformungsprozeß unterzogen, wodurch stark ausgeprägte Umformungen und folglich eine individualisierte Ausgestaltung des Formteils realisiert werden können, ohne daß es zu negativen Erscheinungen, wie Delaminierung und Faltenbildung, kommt. Es können zudem zahlreiche unterschiedliche Formen realisiert werden, so daß das erfindungsgemäße Formteil in weiten Bereichen eingesetzt werden kann.
- Die Ausbildung der Schichtstruktur bereits vor bzw. während der Umformung ermöglicht die vollflächige Verbindung aller Schichten im fertigen Formteil, was bei nachträglicher Laminierung im Bereich starker Wölbungen und Biegungen nicht zu realisieren ist.
- Die erhaltenen Formteile sind in hohem Maße beständig gegenüber Verschmutzungen und Beschädigungen, so daß sie sich insbesondere zur Verwendung in oder als Sitzeinheiten z. B. in öffentlichen Verkehrsmitteln eignen.
- Die Herstellung des erfindungsgemäßen Werkstoffteils bzw. Formteils umfaßt eine geringe Anzahl an Verfahrensschritten, so daß es sich um ein äußerst kostengünstiges Herstellungsverfahren handelt.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Umformbares, insbesondere thermoformbares, plattenförmiges Werkstoffteil (1) mit mehrschichtigem Aufbau (2), insbesondere zur Herstellung von Formteilen (6) vorzugsweise für Möbel, wobei das Werkstoffteil (1) mindestens einen umformbaren, insbesondere thermoformbaren, plattenförmigen Träger (3) aufweist, wobei der Träger (3) aus einem thermoplastischen Material besteht,
**dadurch gekennzeichnet,**
**daß** das Werkstoffteil (1) mindestens ein dem Träger (3) zugeordnetes, insbesondere textiles Flächenmaterial (4) aufweist, wobei das Flächenmaterial (4) auf den Träger (3) auflaminiert ist.

2. Werkstoffteil nach Anspruch 1, **dadurch gekennzeichnet, daß** zwischen dem Träger (3) und dem Flächenmaterial (4) eine insbesondere flächige Zwischenschicht (5), insbesondere eine Schaumstoffschicht, angeordnet ist, insbesondere wobei das Flächenmaterial (4) auf die Zwischenschicht (5) auflaminiert ist und die Zwischenschicht (5) mit dem Träger (3) verbunden, insbesondere flächig verbunden, ist.

3. Umformbares, insbesondere thermoformbares, plattenförmiges Werkstoffteil (1) mit mehrschichtigem Aufbau (2), insbesondere zur Herstellung von Formteilen (6) vorzugsweise für Möbel, wobei das Werkstoffteil (1) mindestens einen umformbaren, insbesondere thermoformbaren, plattenförmigen Träger (3) aufweist, wobei der Träger (3) aus einem thermoplastischen Material besteht,
**dadurch gekennzeichnet,**
**daß** das Werkstoffteil (1) mindestens ein dem Träger (3) zugeordnetes, insbesondere textiles Flächenmaterial (4) und eine zwischen dem Träger (3) und dem Flächenmaterial (4) angeordnete flächige Zwischenschicht (5), insbesondere eine Schaumstoffschicht, aufweist, wobei das Flächenmaterial (4) auf die Zwischenschicht (5) auflaminiert ist und die Zwischenschicht (5) mit dem Träger (3) verbunden, insbesondere flächig verbunden, ist.

4. Werkstoffteil nach einem oder mehreren der vorangehenden Ansprüche, **dadurch gekennzeichnet, daß** der Träger (3) ein bei Gebrauchstemperatur, insbesondere bei Raumtemperatur (25 °C) und Atmosphärendruck, harter Thermoplast ist und/oder daß der Träger (3) bei Raumtemperatur (25 °C) und Atmosphärendruck zumindest im wesentlichen formstabil und/oder zumindest im wesentlichen selbsttragend ist und/oder daß der Träger (3) nichtporös und/oder nichtgeschäumt ausgebildet ist und/oder daß das Flächenmaterial (4) und/oder die Zwischenschicht (5) flächenbezogen kleiner dimensioniert ist/sind als der Träger (3) und/oder daß der Träger (3) eine Dicke von 1 mm bis 15 mm, vorzugsweise 1,5 mm bis 5 mm, bevorzugt 2 mm bis 10 mm, besonders bevorzugt 2,5 mm bis 7 mm, ganz besonders bevorzugt 3 mm bis 5 mm, aufweist.

5. Werkstoffteil nach einem oder mehreren der vorangehenden Ansprüche, **dadurch gekennzeichnet, daß** das Flächenmaterial (4) ein textiles Flächenmaterial ist, insbesondere wobei das Flächenmaterial (4) ein Gewebe, Gewirke, Gestricke oder Gelege, vorzugsweise ein Gewebe, ist und/oder daß das Flächenmaterial (4) ein Flächengewicht von 25 bis 600 g/m², insbesondere 50 bis 500 g/m², vorzugsweise 100 bis 400 g/m², aufweist und/oder daß das Flächenmaterial (4) reversibel dehnfähig, insbesondere bielastisch, ist, insbesondere wobei das Flächenmaterial (4) eine Dehnbarkeit in mindestens eine Richtung, vorzugsweise in Längs- und Querrichtung, von mindestens 5 %, insbesondere mindestens 10 %, vorzugsweise mindestens 20 %, aufweist.

6. Werkstoffteil nach einem oder mehreren der vorangehenden Ansprüche, **dadurch gekennzeichnet, daß** das Flächenmaterial (4) mittels eines Laminier- und/oder Kaschiermittels, insbesondere eines Klebstoffs, vorzugsweise eines Schmelzklebstoffs, bevorzugt eines Schmelzkleberwebs, auf den Träger (3) bzw. die Zwischenschicht (5) auflaminiert ist und/oder daß das Flächenmaterial (4) und/oder der Träger (3) bzw. die Zwischenschicht (5) hitzeklebrig ausgebildet sind.

7. Werkstoffteil nach einem der Ansprüche 2 bis 6, **dadurch gekennzeichnet, daß** die Zwischenschicht (5) ein Schaumstoff auf Basis von Polyolefinen oder Polyurethanen, vorzugsweise Polyolefinen, ist und/oder daß die Zwischenschicht (5), insbesondere Schaumstoffschicht, ein geschlossenporiger und/oder geschlossenzelliger Schaumstoff ist und/oder daß die Zwischenschicht (5), insbesondere Schaumstoffschicht, eine Dicke von 1 mm bis 50 mm, insbesondere 2 mm bis 40 mm, vorzugsweise 3 mm bis 30 mm, bevorzugt 4 mm bis 25 mm, besonders bevorzugt 5 mm bis 20 mm, aufweist.

8. Werkstoffteil nach einem oder mehreren der vorangehenden Ansprüche, **dadurch gekennzeichnet, daß** der Träger (3) auf der dem Flächenmaterial (4) abgewandten Seite mindestens ein dem Träger (3) zugeordnetes, insbesondere textiles Flächenmaterial (4') aufweist, insbesondere wobei das Flächenmaterial (4') auf den Träger (3) auflaminiert ist und/oder insbesondere wobei auf der dem Flächenmaterial (4) abgewandten Seite zwischen dem Träger (3) und dem Flächenmaterial (4') eine flächige Zwischenschicht (5'), insbesondere Schaumstoffschicht, angeordnet ist, insbesondere wobei das Flächenmaterial (4') auf die Zwischenschicht (5') auflaminiert ist und die Zwischenschicht (5') mit dem Träger (3) verbunden, insbesondere flächig verbunden, ist.

9. Formteil (6), insbesondere für die Herstellung von Möbeln, wie Sitzmöbeln und dergleichen, erhältlich bzw. hergestellt durch Umformen, insbesondere Thermoformen, mindestens eines Werkstoffteils (1) nach einem der Ansprüche 1 bis 8.

10. Formteil nach Anspruch 9, **dadurch gekennzeichnet, daß** das dem Träger (3) des Werkstoffteils (1) zugeordnete Flächenmaterial (4) vor dem Umformen oder während des Umformens des Werkstoffteils (1) zu dem Formteil (6) auf den Träger (3) auflaminiert ist und/oder daß die zwischen dem Träger (3) und dem Flächenmaterial (4) des Werkstoffteils (1) angeordnete Zwischenschicht (5), insbesondere Schaumstoffschicht, vor dem Umformen oder während des Umformens mit dem Träger (3) verbunden, insbesondere flächig verbunden, ist und das Flächenmaterial (4) vor dem Umformen oder während des Umformens auf die Zwischenschicht (5) auflaminiert ist.

11. Formteil (6), insbesondere für die Herstellung von Möbeln, wie Sitzmöbeln und dergleichen, wobei das Formteil (6) eine dreidimensionale Form bzw. Struktur, insbesondere Wölbungen, Vertiefungen, Ausbuchtungen, Biegungen oder dergleichen, aufweist, wobei das Formteil (6) einen mehrschichtigen Aufbau (2) mit einem Träger (3) aus einem thermoplastischen Material und einem dem Träger (3) zugeordneten, insbesondere textilen Flächenmaterial (4) aufweist, wobei das Flächenmaterial (4) auf den Träger (3) auflaminiert ist.

12. Formteil (6), insbesondere für die Herstellung von Möbeln, wie Sitzmöbeln und dergleichen, wobei das Formteil (6) eine dreidimensionale Form bzw. Struktur, insbesondere Wölbungen, Vertiefungen, Ausbuchtungen, Biegungen oder dergleichen, aufweist, wobei das Formteil (6) einen mehrschichtigen Aufbau (2) mit einem Träger (3) aus einem thermoplastischen Material und einem dem Träger (3) zugeordneten, insbesondere textilen Flächenmaterial (4) und ein zwischen dem Träger (3) und dem Flächenmaterial (4) angeordnete flächige Zwischenschicht (5), insbesondere Schaumstoffschicht, aufweist, wobei das Flächenmaterial (4) auf die Zwischenschicht (5) auflaminiert ist und die Zwischenschicht (5) mit dem Träger (3) verbunden, insbesondere flächig verbunden, ist.

13. Verwendung eines Formteils (6) nach einem der Ansprüche 9 bis 12 und/oder eines Werkstoffteils (1) nach einem der Ansprüche 1 bis 8 zur Herstellung von Möbeln, insbesondere Sitzmöbeln.

14. Möbel (8), insbesondere Sitzmöbel, aufweisend mindestens ein Formteil (6) nach einem der Ansprüche 9 bis 12 und/oder mindestens ein Werkstoffteil (1) nach einem der Ansprüche 1 bis 8.

15. Verfahren zur Herstellung eines Formteils (6), insbesondere für die Herstellung von Möbeln, wie Sitzmöbeln und dergleichen, **gekennzeichnet durch** die folgenden Verfahrensschritte:
a) Bereitstellung eines umformbaren, insbesondere thermoformbaren, plattenförmigen Werkstoffteils (1), insbesondere nach einem oder mehreren der Ansprüche 1 bis 8, mit mehrschichtigem Aufbau (2), aufweisend einen umformbaren, insbesondere thermoformbaren plattenförmigen Träger (3) aus einem thermoplastischen Material und ein dem Träger zugeordnetes, insbesondere textiles Flächenmaterial (4) und gegebenenfalls eine zwischen dem Träger (3) und dem Flächenmaterial (4) angeordnete, insbesondere flächige Zwischenschicht (5);
b) Umformen des Werkstoffteils (1) zum Erhalt des Formteils (6) mit einer dreidimensionalen Form bzw. Struktur, insbesondere Wölbungen, Vertiefungen, Ausbuchtungen, Biegungen oder dergleichen.

16. Verfahren nach Anspruch 15, **dadurch gekennzeichnet, daß** das textile Flächenmaterial (4) vor Durchführung der Verfahrensschritte a) und b) oder aber während des Umformens in Verfahrensschritt b) auf den Träger (3) auflaminiert wird und/oder daß das Flächenmaterial (4) während des Umformens in Verfahrensschritt b) auf den Träger (3) auflaminiert wird.

17. Verfahren nach Anspruch 15, **dadurch gekennzeichnet, daß** vor Durchführung der Verfahrensschritte a) und b) zwischen dem Träger (3) und dem Flächenmaterial (4) eine insbesondere flächige Zwischenschicht (5), insbesondere Schaumstoffschicht, angeordnet wird, insbesondere wobei das Flächenmaterial (4) vor Durchführung der Verfahrensschritte a) und b) oder aber während des Umformens in Verfahrensschritt b) auf die Zwischenschicht (5) auflaminiert und die Zwischenschicht (5) mit dem Träger (3) verbunden, insbesondere flächig verbunden, vorzugsweise laminiert, wird und/oder daß das Flächenmaterial (4) während des Umformens in Verfahrensschritt b) auf die Zwischenschicht (5) auflaminiert wird und/oder daß die Zwischenschicht (5) während des Umformens in Verfahrensschritt b) mit dem Träger (3) verbunden, insbesondere flächig verbunden, vorzugsweise laminiert, wird.

18. Verfahren nach einem der Ansprüche 15 bis 17, **dadurch gekennzeichnet, daß** der Träger (3), das Flächenmaterial (4) und gegebenenfalls die Zwischenschicht (5) zumindest teilweise vor Durchführung der Verfahrensschritte a) und b) laminiert werden, insbesondere wobei während der Umformung in Verfahrensschritt b) die Umformtemperatur derart ausgewählt wird, daß im Falle eines Laminierens mit einem Laminier- bzw. Kaschiermittel das Laminier- bzw. Kaschiermittel, insbesondere der Klebstoff, vorzugsweise Schmelzklebstoff, besonders bevorzugt das Schmelzkleberweb, in einen flüssigen, insbesondere zähflüssigen, und/oder hitzeklebrigen Zustand gebracht wird und/oder daß im Falle eines Laminierens ohne Laminier- bzw. Kaschiermittel mindestens eine Oberfläche des Trägers (3) und/oder des textilen Flächenmaterials (4) und/oder gegebenenfalls der Zwischenschicht (5) hitzeklebrig werden, so daß bei dem Umformen in Verfahrensschritt b) die Schichten (3, 4, 5) gegeneinander verschiebbar sind.

19. Verfahren nach einem der Ansprüche 15 bis 18, **dadurch gekennzeichnet, daß** das Umformen in Verfahrensschritt b) mittels eines Formgebungsverfahrens, insbesondere mittels Thermoformen, vorzugsweise Tiefziehen, Vakuumformen, Vakuum-Tiefziehformen und dergleichen, durchgeführt wird.

20. Verfahren zur Herstellung eines Formteils (6), insbesondere für die Herstellung von Möbeln, wie Sitzmöbeln und dergleichen,
**dadurch gekennzeichnet,**
**daß** ein Werkstoffteil (1) nach einem der Ansprüche 1 bis 8 mit an sich bekannten Umformungsverfahren zu einem Formteil (6) nach einem der Ansprüche 9 bis 12 umgeformt wird.
